# EUROPEAN PATENT SPECIFICATION

(11) **EP 4 173 811 B1**
(45) Date of publication and mention of the grant of the patent: **26.11.2025**
(21) Application number: 21382972.4
(22) Date of filing: 28.10.2021
(51) Int. Cl.: B29D 29/08, B29D 29/10, B26D 1/02, B26D 3/16, B26D 3/06, B23C 3/30, B23C 3/34

(54) **PROCESS FOR MANUFACTURING MULTI-RIBBED BELTS AND MACHINE FOR MACHINING A SLEEVE**
VERFAHREN ZUR HERSTELLUNG VON MEHRRIPPENRIEMEN UND MASCHINE ZUM BEARBEITEN EINER HÜLLE
PROCÉDÉ DE FABRICATION DE COURROIES À NERVURES MULTIPLES ET DISPOSITIF DE TRAITEMENT D'UN MANCHON

(43) Date of publication of application: 03.05.2023
(73) Proprietor: Ammega Group AG, 6302 Zug (CH)
(72) Inventor: Galán, Ernesto, 08800 VILANOVA I LA GELTRU (ES); Perfetti, Gianluca, 08800 VILANOVA I LA GELTRU (ES); Renyé, Josep, 08800 VILANOVA I LA GELTRU (ES)
(74) Representative: Studio Torta S.p.A.

(56) References cited:
- EP-A1- 0 642 886
- EP-A2- 0 967 069
- DE-A1- 2 358 964
- US-A- 3 107 563
- US-A- 5 192 382

## Description

### TECHNICAL FIELD

The present invention relates to a process for manufacturing multi-ribbed belts. In particular, the present invention refers to the manufacturing of PV belts or micro-V belts having length lower than 350 mm, for transferring motion in the field of conveyors, e.g. for parcel handling, to which the following disclosure explicitly refers without losing generality.

### STATE OF THE PRIOR ART

For manufacturing multi-ribbed belts, it is generally known to form the annular grooves of such belts by moulding. By way of example, according to a known process, a sleeve is assembled on an expandable mould so as to include a plurality of cords and at least one layer made of a butadiene rubber (BR) compound or a chloroprene rubber (CR) compound. After assembly, the sleeve is placed into a multi-ribbed mould, in which heat and pressure are applied, so as to embed the cords into the compound and to form the annular grooves by moulding the same compound during curing.

There is the need to provide a manufacturing process in which the annular grooves of the belt are formed by machining, e.g. by milling, instead of being formed by moulding, especially for belts having smaller sizes, because it is difficult to manually handle small sleeves into the moulds.

In particular, a need is felt to provide a process capable of achieving relatively high performance, product quality and production rate.

US3107563A discloses an apparatus for cutting a plurality of individual belts from an endless elastomeric belt-band having embedded therein a plurality of axially spaced groups of reinforcing members. The latter are formed by automatically winding a continuous strand over a fabric sleeve, arranged on a mould. An elastomeric layer is applied over the convolutions of the strand, in the form of a sheet of sufficient thickness to provide for the teeth and the body of the belt. Thereafter, the belt band is shaped and cured with sufficient pressure to cause the elastomeric layer to flow between the convolutions of the strand, thereby stretching the fabric and forcing it into grooves of the mould, so as to form the teeth of the belt.

US5192382A discloses a vulcanized annular body, which is wound on two drums and revolved to grind grooves in V-shape on predetermined locations of the vulcanized annular body. After the grinding step, the annular body is cut to produce a plurality of low-edge V-belts.

EP0967069A2 discloses a method of producing a double-sided belt structure from an endless body. After forming and vulcanizing a belt sleeve, the latter is arranged around a driving pulley and a driven pulley. After a first grinding operation, the belt sleeve is removed from the pulleys and turned inside out, so as to grind the opposite surface. Afterwards, the belt structure is removed from the pulleys and cut into individual belts having a desired width.

### SUMMARY OF INVENTION

Aim of the present invention is to provide a process for manufacturing a multi-ribbed belt, which enables the above-mentioned need to be met in an easy and inexpensive way.

This aim is achieved by a manufacturing process according to the appended claims 1 to 12, and by a machine according to the appended claims 13 to 15.

### BRIEF DESCRIPTION OF THE DRAWINGS

- Figure 1 is a perspective view of a multi ribbed belt manufactured according to a preferred embodiment of the process of the present invention;
- Figures 2A and 2B are cross-sections of the multi-ribbed belt of figure 1, taken according to orthogonal section planes indicated by A-A and, respectively, B-B in figure 1;
- Figure 3 schematically and partially shows a forming cylinder used to perform some steps of the manufacturing process of the present invention;
- Figures 4-9 partially and schematically show the steps performed by using the forming cylinder of figure 3;
- Figures 10A-10C are cross-sections showing, in detail, a vulcanization step according to the process of the present invention;
- Figures 11 partially and schematically shows a further step in which the forming cylinder is replaced by a support cylinder after the vulcanization step, according to a preferred embodiment of the invention;
- Figures 12-14 partially and schematically show some steps carried out after the vulcanization step.

### DESCRIPTION OF INVENTION

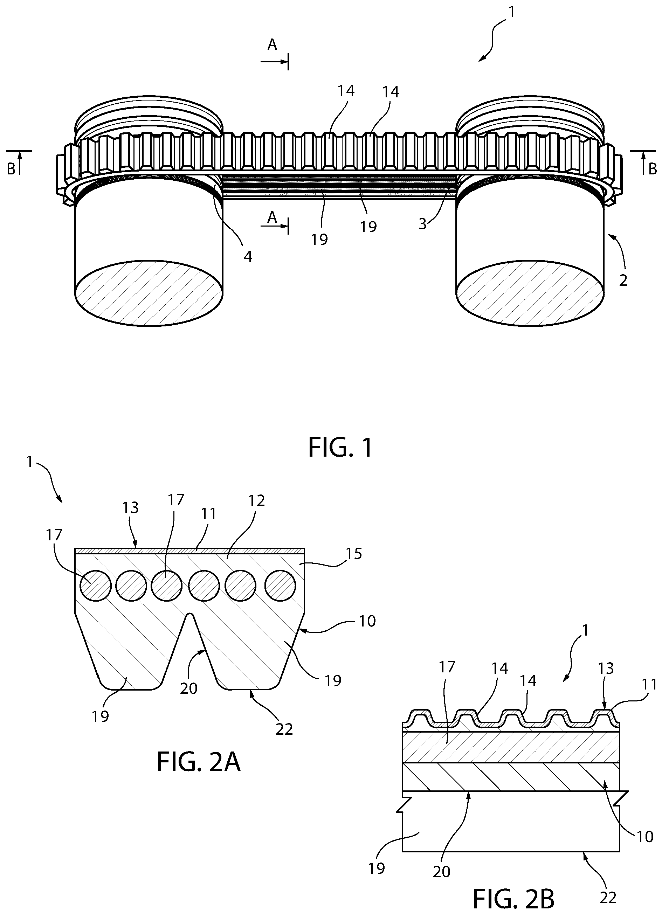

Referring to Figure 1, reference numeral 1 indicates a multi-ribbed belt, or multi-groove belt, that is used, in particular, as an endless belt in a conveyor 2 (partially shown) capable of transferring goods along a line, e.g. for transferring parcels. The belt 1 transfers a rotational motion from a driving pulley 3 to a driven pulley 4, which are provided at the axial ends of respective conveyor rollers in this specific example.

With reference to figure 2A, the belt 1 comprises a body 10 made of a material comprising a polymeric or elastomeric compound, with reinforcing fibres embedded in such compound. In particular, such compound comprises an elastomer, more in particular an ethylene elastomer, in order to get a belt designed with increased chemical resistance and larger temperature range capability than the known solutions made of BR or CR compounds. By way of example, the compound of the body 10 is essentially composed of EPDM (ethylene-propylene diene monomer). Anyway, in general, other possible elastomers could be chosen, by way of example the BR or CR compounds, mentioned above. In addition to the elastomeric materials, the body compound can comprise conventional additives (such as, for example, reinforcement agents, plasticizers, pigments, stearic acid, accelerators, vulcanization agents, antioxidants, activators, initiators, plasticizers, waxes, prevulcanization inhibitors, antidegradants, process oils and similar).

In general, the fibre reinforcement tends to increase the power that can be transmitted by the belt 1. In particular, the reinforcing fibres are made of a polyamide (PA) or cotton or aramide. These materials achieve the best compromise with cost requirements and, in addition, the best compromise in relation to noise and friction coefficient with respect to the pulleys.

The belt 1 further comprises an additional back layer 11, covering a portion 12 of the body 10 and defining an outer back surface 13 of the belt 1. Preferably, such layer 11 is defined by a fabric. In particular, the fabric of the layer 11 is made of a polyamide (PA): PA allows for achieving a certain amount of elasticity, that is needed to longitudinally stretch the belt 1 when the latter is mounted on the pulleys 3,4 and during working conditions. In addition, during the manufacturing process, the PA fabric makes the release from a forming cylinder easier, as it will be explained in detail in the following paragraphs. Just as an example, the fabric defining the layer 11 is a woven PA 6.6 textured fabric. Anyway, other materials and/or structures could be provided for the back layer 11.

As shown in figure 2B, the surface 13 is preferably shaped as a toothed surface, more preferably as a toothed surface of an endless timing belt. Just as an example, the tooth pitch is between 1,5 and 2,5 mm, and the tooth height is between 0,4 and 1 mm. In particular, such toothed surface is designed according to the MXL belt section according to the RMA IP-24 standard.

More in general, the surface 13 defines at least one tooth 14, which preferably extends orthogonally to the annular direction of the belt 1.

The layer 11 is continuous along the annular periphery of the belt 1, and has a constant thickness, on the body 10. Therefore, the portion 12 of the body 10 is toothed according to the same profile of the surface 13.

Again with reference to figure 2A, the toothed portion 12 project from an intermediate portion 15 of the body 10, and the belt 1 comprises a plurality of filiform inserts embedded in such portion 15; the inserts are referred to hereinafter as "cords" and are indicated by reference number 17. The cords 17 extend parallel to each other and substantially parallel to a longitudinal direction of the belt 1. Actually, the cords 17 are parts of a single cord that is spirally wound during the manufacturing process.

According to the preferred embodiment, the cords 17 are made of a polyamide (PA), in order to make the belt 1 sufficiently elastic, and in order to have good adhesion with respect to the elastomeric compound of the body 10. Anyway, other materials could be provided.

On the front side, opposite with respect to the back surface 13 and the portion 12, the body 10 comprises a front portion defined by a plurality of annular longitudinal ribs 19, which project from the portion 15, are arranged side by side along the width of the belt 1, and are alternated to annular longitudinal grooves 20. The ribs 19 engage, in use, corresponding circular grooves of the pulleys 3,4. Preferably, the grooves 20 and the ribs 19 are V-shaped, by way of example according to the ISO 9982 standard, with a profile identified as PH or PJ in such standard.

According to an aspect of the present invention, the front portion constituted by the ribs 19 of the body 10 directly defines an outer surface 22 of the belt 1, i.e. without additional layers, fabrics or films covering such front ribbed portion, just because the grooves 20 are formed by machining the body 10, e.g. by milling, as it will be explained below in detail.

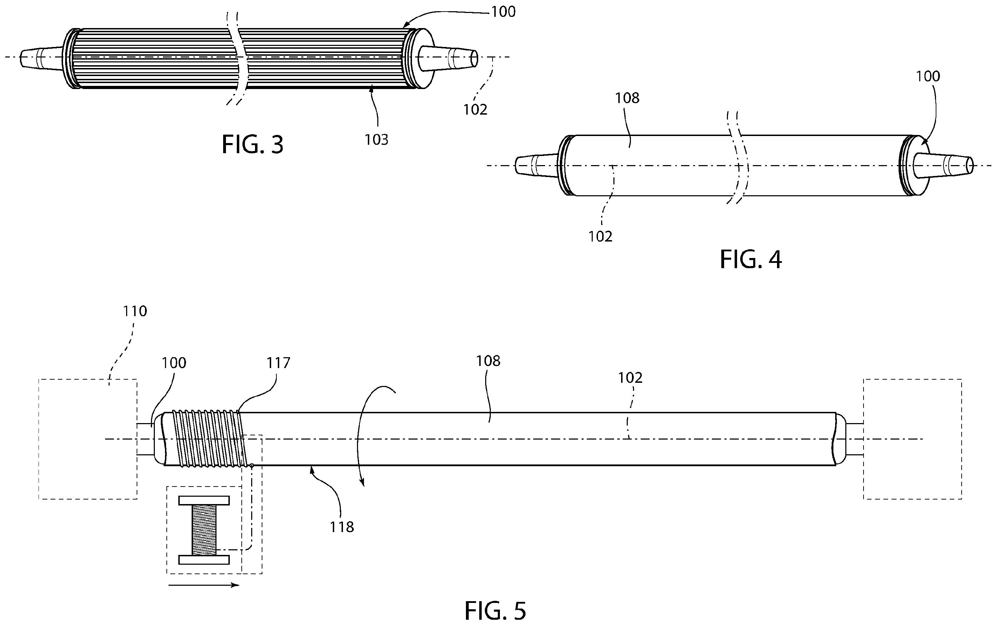

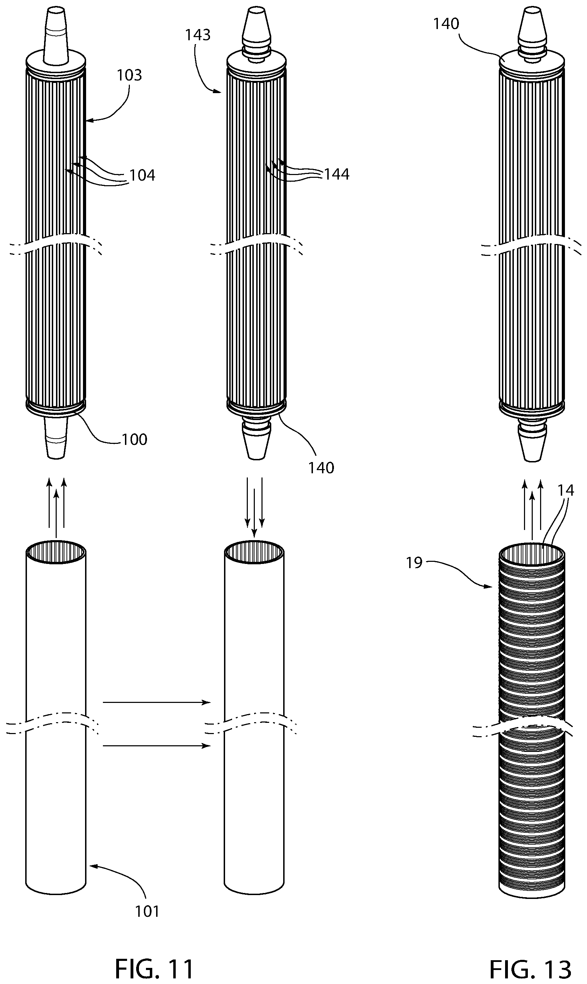

The belt 1 is manufactured by forming a sleeve 101 (fig. 11) on a mould defined by a forming cylinder 100, schematically shown in figure 3. The cylinder 100 extends along an axis 102 and has an outer surface 103, having a shape, or profile, which is complementary to the shape/profile of the surface 13, if sectioned by a section plane orthogonal to the axis 102.

The outer diameter of the cylinder 100 is set/chosen during the design phase in order to define the annular length of the sleeve 101, which corresponds to the annular length of the belt 1.

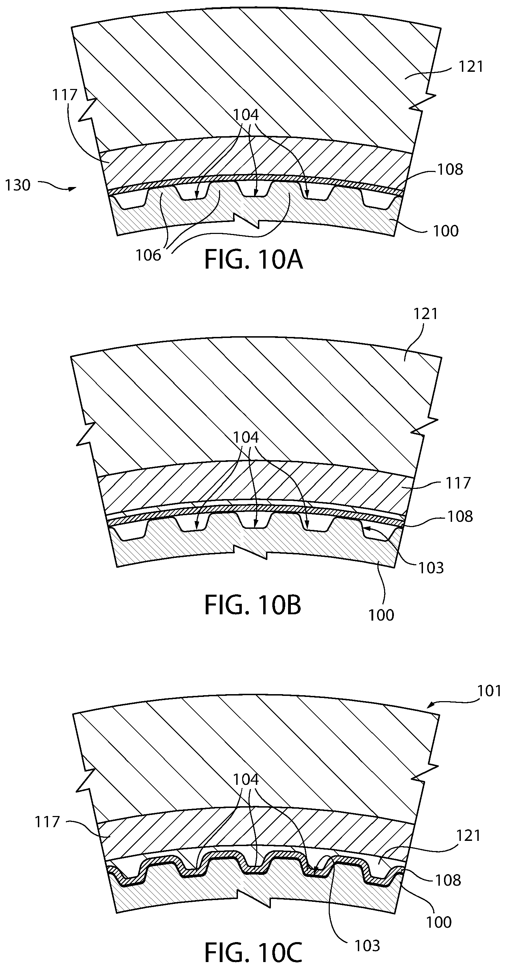

In particular, as schematically shown in figure 10A, the outer surface 103 is shaped so as to define a plurality of recesses, which are parallel to the axis 102 so as to define respective grooves 104, alternated with projections 106 along the annular periphery of the cylinder 100. The grooves 104 will define, at the end of the process, the teeth 14 of the surface 13 of the belt 1. In other words, number, shape, dimensions, pitch, etc. of the grooves 104 respectively correspond to the ones of the teeth 14.

According to variants that are not shown, the grooves 104 may be different in number and/or shape and/or pitch and/or dimensions with respect to the examples given above.

Preferably, the surface 103 is made of a low-friction material, and/or is preliminary treated so as to be coated (e.g by spraying) with a film made of a known release agent. In this way, the extraction of the formed sleeve 101 from the cylinder 100 is easier.

After possible preliminary steps (coating, cleaning, etc.), with reference to figure 4, the surface 102 is covered by a tubular jacket 108, in such a manner that the jacket 108 rests onto the outer ends of the projections 106 (fig. 10A) while the grooves 104 are empty. The tubular jacket 108 will define the back layer 11 of the belt 1 at the end of the process. By way of example, the tubular jacket 108 is preformed in a separate station (e.g. by cutting and thermo-welding), and then fitted onto the surface 102, but different techniques could be anyway used.

Afterwards, the cylinder 100, with the jacket 108 arranged thereon, is transferred, e.g. by a crane (not shown), to an assembling station and mounted on an assembling machine 110 (partially and schematically shown in figure 5). On such machine 110, one or more cords 117 are wound as a spiral around the jacket 108 with a pre-defined tension, so as to make such cord(s) 117 rest on an outer surface 118 of the jacket 108, while the cylinder 100 is rotated about its axis 102, according to a technique that is well known in the art. The spiralling angle will define the pitch between the cords 17 in the body 10 of the belt 1 (and therefore the axial gaps between such cords 17), and the tensioning guarantees the maintenance of the positioning of the cord 117 during the following process steps.

Preferably, no further layer or additional material is provided between the jacket 108 and the cord 117.

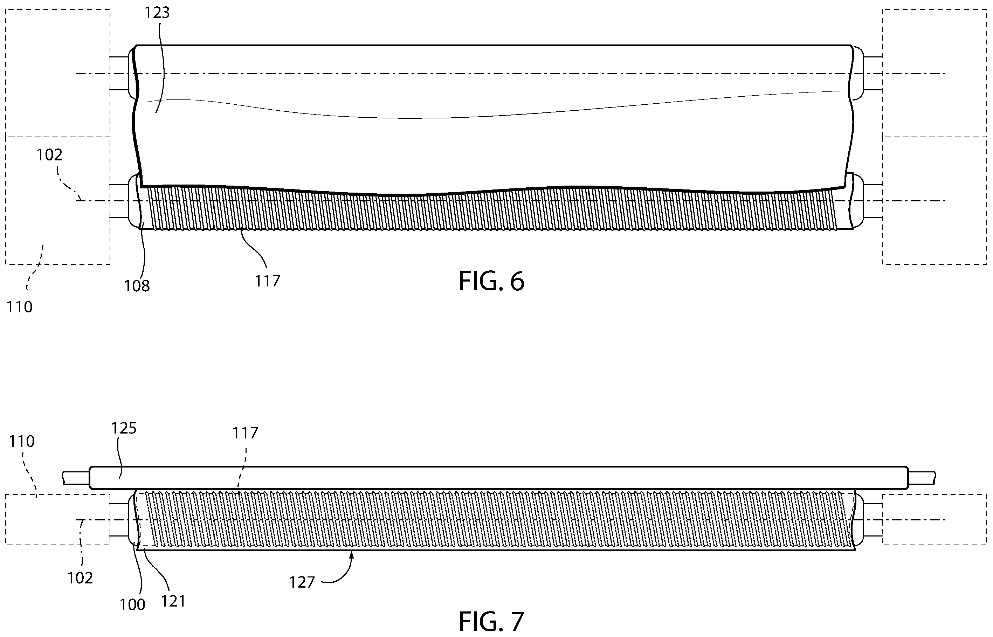

With reference to the schematic representations in figures 6 and 7, an uncured polymeric or elastomeric compound is applied or deposited onto the jacket 108 and the wound cords 117, so as to form an annular layer 121 made of such uncured compound around the cords 117 and the jacket 108. In particular, the layer 121 is formed by wrapping a continuous calandered sheet 123, comprising the uncured compound, while the cylinder 100 is rotated about its axis 102, according to a technique that is commonly known in the art. This wrapping step is carried out preferably while the cylinder 100 is still mounted on the same machine 110.

The material of the annular layer 121 is pressed, e.g. by a roller 125 (fig. 7) parallel to the axis 102 while the cylinder 100 is rotated about its axis 102, so as to expel air from the gap between the jacket 108 and the layer 121, so that the cords 117 are at least partially embedded in the uncured compound of the layer 121.

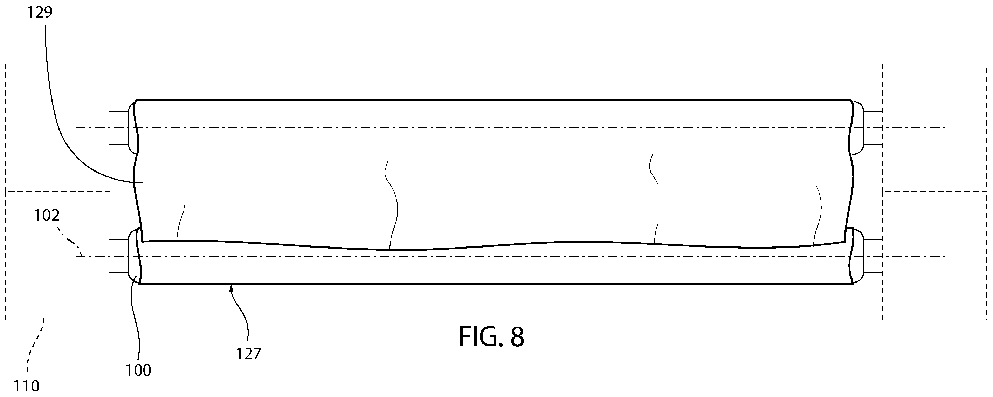

Afterwards, as schematically shown in figure 8, the outer surface 127 is covered by a protective film 129, e.g. by a very thin fabric made of a polyamide, capable of avoiding sticking of the uncured compound to the vulcanization device/station that will be used during the following step. Preferably, this covering step is carried out while the cylinder 100 is still mounted on the same machine 110, by rotating the cylinder 100 about its axis 102 and supplying a continuous strip of covering material.

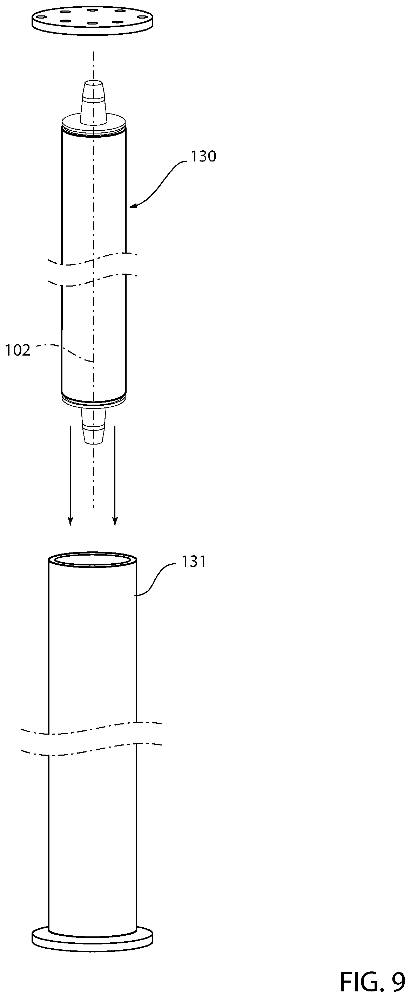

The cylinder 100, the jacket 108, the cord(s) 117, the layer 121 and the film 129 define an assembly 130 (fig. 9), which is uncoupled from the machine 110, is transferred to a vulcanization station (e.g. by a crane, not shown) and inserted into a commonly known vulcanization device 131 (schematically shown in fig. 9).

A vulcanization step is performed: the device 131 is pressurized to radially exert a pressure on the outer surface of the assembly 130 towards the axis 102, i.e. by a pressurized bag radially acting onto the film 129, together with heating the assembly 130. Temperature values, pressure values, and duration times (for the application of heat and pressure), could be established on the basis of experimental tests or software simulations, and essentially depend on the kind of materials that have to be cured, and on the heating technique.

As schematically shown in fig. 10B, temperature, pressure and time are chosen in such a manner that the uncured material of the layer 121 melts and flows through the axial gaps between the circumferential cord portions of the cord 117 (and possibly between the cord 117 and the jacket 108).

In the meantime, the jacket 108 is radially compressed by the melted material towards the outer surface 103 of the cylinder 100. Such compression exerts a deformation action on the jacket 108, which e.g. elastically stretches, until it wholly rests against the faces defining the grooves 104 of the surface 103. In the meantime, the material of the layer 121 completely fills in such grooves 104 (fig. 10C).

By way of example, when the body 10 is essentially made of EPDM and PA reinforcing fibres, the temperature values can be between 140 and 175 °C, the pressure values can be between 3 and 8 bar, and the process time can be between 20 and 60 minutes.

After this step, the sleeve 101 is cooled down in a known manner, preferably by immersion in water, and the compound of the layer 121 finally results to be cured and stably shaped (with the film 129 still arranged on its outer surface). The shaped and cured material of the layer 121 defines the body 10 of the belt 1. It is therefore evident that the teeth 14 have been completely formed by the grooves 104: accordingly, such teeth 14 extend longitudinally, parallel to each other.

Afterwards, according to a preferred embodiment of the invention, the cylinder 100 is transferred to a release station (fig. 11), where the sleeve 101 is axially removed from the cylinder 100. In particular, the cylinder 100 is pulled upwards (e.g. by a crane), while the sleeve 101 is held down by a supporting device, at its lower end. As mentioned above, a low-friction material or release agent provided at the outer surface 103 can help in decoupling the sleeve 101 from the cylinder 100. According to a preferred variant (not shown), at least one gas jet (e.g. an air jet) is inflated between the outer surface 103 and the jacket 108 (at one or both the axial ends of the sleeve 101), so as to generate a pressurized radial gap that helps in detaching and possibly expanding the jacket 108 with respect to the cylinder 100.

The cylinder 100 is retrieved to start another cycle (and form another sleeve), while the sleeve 101 is transferred from the release station and axially fitted onto a support defined by a cylinder 140 (schematically shown in figure 11), which differs from the cylinder 100 because it has an outer surface 143 with an outer diameter slightly lower than the surface 103 (e.g. 0,1 mm lower). Accordingly, the lateral surface of the cylinder 140 has a plurality of radial retaining seats 144, that are engaged respectively by the radially protruding teeth 14 when the sleeve 101 is fitted onto the cylinder 140. The shape of the seats 144 and, therefore, the shape of the outer surface 143, in cross-section, are preferably equal to the ones of the outer surface 103.

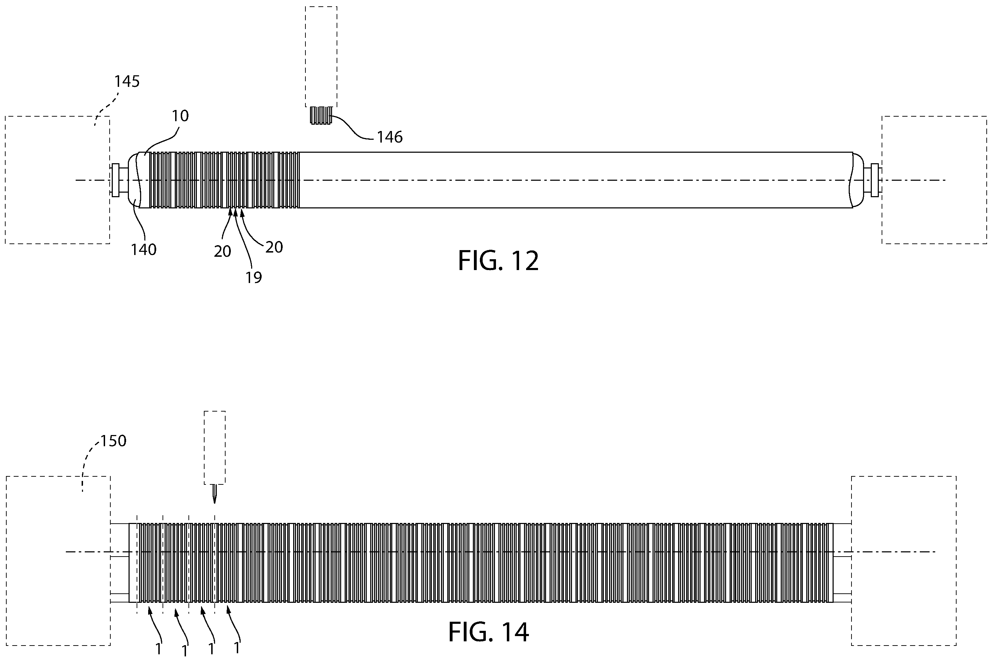

The cylinder 140, with the sleeve 101 fitted thereon, is mounted on a machine 145, partially and schematically shown in figure 12. The cured compound of the sleeve 101 is machined by at least one machining tool 146, e.g. defined by a milling tool, or a cutting tool or a grinding tool, while the cylinder 140 is rotated about its axis, so as to form the annular grooves 20 by removing material (by milling, cutting and/or grinding). In this way, such grooves 20 define, there between, the annular ribs 19. The radial thickness of the layer 121 is pre-defined during the design phase so as to be sufficient to guarantee the desired height for the ribs 19, and the desired distance of the ribs 19 from the cord 17.

Preferably, the machining tool 146 has several tips, each forming a corresponding groove 20. In other words, the shape of the tool 146 is complementary to the profile of the ribs 19. In the example shown in figure 12, a portion of non-grooved material can be seen in the body 10 of the sleeve 101 every six ribs, but such portion is actually provided only for test samples (in regular production, the whole surface of the sleeve 101 is grooved). In this regard, preferably, all the grooves 20, for the whole axial length of the sleeve 101, are formed together at the same time; more preferably, they are formed by a single machining tool, not shown (accordingly, such a tool has a number of tips corresponding to the whole length of the sleeve 101).

During the machining step, in addition, the film 129 is removed.

According to the present invention, during the machining step, the retaining seats 144 engaged by the teeth 14 hold the sleeve 101 with respect to the cylinder 140; in particular, the sleeve 101 is retained by the seats 144 in a fixed angular position about the axis of the cylinder 140. In other words, the engagement between the teeth 14 and the faces of the retaining seats 144 react to the tangential action of the machining tool 146, so as to avoid a possible circumferential slipping of the sleeve 101 along the outer surface 143 of the cylinder 140, and avoids possible torsions of the sleeve 101 with respect to the cylinder axis.

After the machining step, the cylinder 140 is removed from the machine 145, and the machined sleeve is axially extracted from the cylinder 140, e.g. by using the same technique already provided for the extraction from the cylinder 100, as schematically shown in figure 13.

According to a variant, not shown, the machining step is performed while the sleeve 101 is still mounted on the cylinder 100, without providing and using any additional supporting cylinder 140 and therefore without the need of additional operations for fitting and extracting the sleeve 101. However, the use of the cylinder 140 is preferred, in order to simplify the production lines, i.e. to completely separate the machining step from the vulcanization step; in particular, it is possible to cumulate the sleeves 101 after vulcanization, and to transfer the cumulated sleeves all together to the machining station.

After removal of the machined sleeve, the latter is cut in a cutting machine 150 (partially and schematically shown in figure 14), per se known and not described in detail, so as to axially split the machined sleeve in a plurality of slices, axially arranged side by side. Each slice defines a respective belt 1, having a width and/or a number of ribs 19 corresponding to what is required.

In general, no additional machining steps are needed. However, one or more additional finishing step could be performed: by way of example, the surface of the grooves 20 can be brushed in order to break and raise a part of the reinforcing fibres.

Finally, each belt 1 is reversed so as to arrange the ribs 19 and the grooves 20 towards the inside (to be ready to engage the pulleys 3,4), and the teeth 14 towards the outside so as to define the back side of the belt 1. By way of example, this reversing step is carried out manually during a visual quality check on the belt 1.

From the evaluation of the features of the manufacturing process according to the present invention, the advantages that can be achieved are evident.

Indeed, the ribs 19 and the grooves 20 are formed by machining, and not by moulding. In particular, the grooves 20 can be manufactured with a relatively high precision by the tool 146: avoiding moulds for forming the ribs 19 is particularly advantageous for endless belts having an annular length shorter than 350 mm and a relatively low width (e.g. with only two, three or four ribs 19), because the small sleeves needed for such belts would be difficult to handle in the moulds. Moreover, different shapes for the grooves 20 and the ribs 19 can be achieved, so as to manufacture different kinds of multi-ribbed belts, by simply changing the shape of the machining tool 146, without the need of changing the previous forming steps and the corresponding machinery.

In the meantime, at least one tooth 14 is formed by the cylinder 100, and such tooth 14, by engaging a corresponding radial retaining seat 144, avoids a circumferential slipping and/or angular torsion of the sleeve 101 on the cylinder 140 during the machining step.

In particular, the teeth 14 are made by moulding, but they do not need to be formed with a high precision, and their shape need not to be changed for producing different belts, because such teeth 14 are not provided to be coupled to toothed pulleys for transferring motion, but they are provided, essentially, for avoiding slipping and/or torsion of the sleeve 101 during machining and forming the grooves 20.

In particular, the number and shape of the teeth 14 (and the corresponding cavities defined by the grooves 104,144) are not so important to achieve this effect. By way of example, their shape could be configured during the design phase to allow for an easy extraction of the sleeve 101 from the cylinder 100 after vulcanization. In any case, in the preferred example that has been described, the inflated air jet between the sleeve 101 and the cylinder 100 helps in uncoupling the teeth 14 from the grooves 104 in the release station.

The shape of the teeth 14 has been chosen as the one of the teeth of timing belts, because of mould availability: indeed, it is possible to use a forming cylinder 100 that is already available and used in other production lines for manufacturing known timing belts, without the need of designing and producing other specific forming cylinders. In particular, the claimed process is easy to be performed because the steps carried out for forming the sleeve 101 do not need modifications with respect to the techniques and devices that are already known and available for manufacturing timing belts.

In the meantime, the plurality of teeth 14 on the back surface give a satisfactory flexibility to the belt 1, around the pulleys, during operation.

In conclusion, thanks to the process according to the present invention, it is possible to simplify the handling of the sleeves and achieve a high product quality and a good production rate.

As far as the materials of the belt 1 are concerned, the choice of EPDM for the body 10 allows for achieving an improvement, in driving more power, in relation to known solutions made of BR and CR compounds, as already mentioned above. Besides, PA in the jacket 108 defining the back layer 11 makes the sleeve 101 release from the cylinder 100 easier, and allows for achieving a good adhesion with the compound of the body 10.

It should be clear that modifications can be made to the described manufacturing process and the machine 145, without extending beyond the scope of protection as defined in the appended claims.

For example, the removal of the sleeve 101 from the cylinders 100 and/or 140 could be performed in a different way: by way of example, such cylinders can be designed and manufactured so as to be collapsed or disassembled for the removal of the sleeve 101.

Finally, as mentioned above, different materials and/or different teeth profiles/shapes could be envisaged, even if not described in detail, while the effect of retaining the position of the sleeve 101 is still achieved during the machining step by retaining seats 144 (or 104).

## Claims

1. A manufacturing process for manufacturing multi-ribbed belts, the process comprising the steps of:
- providing a forming cylinder (100), which extends along an axis (102) and has an outer surface (103);
- forming an assembly (130) by
a) providing a jacket (108) on said outer surface (103);
b) winding at least one cord (117) around said jacket (108);
c) depositing a layer (121) on the wound cord, said layer comprising an uncured polymeric or elastomeric compound;
- vulcanizing said assembly (130) so as to cure said compound and form a sleeve (101) from said jacket, cord and layer; the vulcanization step comprising the application of pressure and heat in such a manner that the uncured compound melts, flows around the wound cord, and radially presses the jacket against said outer surface (103);
- machining the cured compound of said sleeve (101) so as to form a plurality of annular grooves (20), axially alternated with annular ribs (19), while said sleeve (101) is mounted on a support (100;140);
- cutting the machined sleeve so as to obtain a plurality of slices, each defining a respective belt (1);
wherein said outer surface (103) has at least one recess, and wherein the jacket (108) is pressed by the melted compound during the vulcanization step to fill in said recess and form a corresponding tooth (14) of the sleeve (101); during the machining step, said tooth (14) engaging a corresponding retaining seat (104;144) of said support (100;140), so as to retain the sleeve (101) with respect to the support (100;140).

2. The process according to claim 1, wherein said support (100;140) has an axis and is rotated about its axis during the machining step; the engagement between the retaining seat (104;144) and the tooth (14) being configured to hold the sleeve (101) in an angularly fixed position, about the support axis.

3. The process according to claim 1 or 2, wherein said support is defined by said forming cylinder (100), and said retaining seat is defined by said recess (104).

4. The process according to claim 1 or 2, wherein said support is defined by a further cylinder (140), distinct from said forming cylinder (100); after the vulcanization step, the process comprising the steps of axially removing the sleeve (101) from the forming cylinder (101) and fitting the removed sleeve (101) onto said further cylinder (140).

5. The process according to claim 4, wherein said further cylinder (140) has an outer diameter lower than the forming cylinder (140).

6. The process according to anyone of the previous claims, wherein said retaining seat (144) and said recess (104) have the same shape.

7. The process according to claim 6, wherein said recess (104) and said retaining seat (144) define respective grooves which are parallel respectively to the axis (102) of the forming cylinder (100) and to an axis of the support, and which have a constant cross-section, along the axial length.

8. The process according to anyone of the previous claims, wherein the machining step is performed so as to form all the annular grooves (20), for the whole axial length of the sleeve (101), at the same time.

9. The process according to claim 8, wherein all the annular grooves (20) are formed by a single machining tool.

10. The process according to anyone of the previous claims, wherein said outer surface (103) has a plurality of grooves (104), alternated with projections (106) along the annular periphery of the forming cylinder (100); said grooves (104) forming, during the vulcanization step, respective teeth (14) of the sleeve (101) and being shaped to define the profile of a timing belt.

11. The process according to anyone of the previous claims, wherein said cord (117) is wound directly on the jacket (108), without any additional layer there between.

12. The process according to anyone of the previous claims, wherein said sleeve (101) is removed from the forming cylinder (101) by inflating a pressurized gas jet radially between the sleeve and the forming cylinder.

13. Machine for machining a sleeve (101) during a process for manufacturing multi-ribbed belts according to anyone of the previous claims, the machine comprising:
- a support (100;140) suitable to support said sleeve (101), and
- at least one machining tool suitable to remove material from said sleeve so as to form a plurality of annular grooves (20), axially alternated with annular ribs (19), while said sleeve (101) is mounted on said support (100;140) during use;
**characterized in that** said support (100;140) comprise a lateral surface having at least one radial retaining seat (104;144) engaged, during machining, by a corresponding tooth (14) of said sleeve (101), so as to retain the sleeve (101) with respect to the support (100;140).

14. The machine according to claim 13, wherein said retaining seat is a groove, which is parallel to an axis of the support, and has a cross-section that is constant along its axial length.

15. The machine according to claim 14, wherein the lateral surface of said support (100;140) has a plurality of grooves (104;144), alternated with projections along the annular periphery of the support, and shaped so as to define a profile corresponding to the one of a timing belt.

## Patentansprüche

1. Herstellungsverfahren zur Herstellung von Keilrippenriemen, wobei das Verfahren die folgenden Schritte umfasst:
- Bereitstellen eines Formzylinders (100), der sich entlang einer Achse (102) erstreckt und eine Außenfläche (103) aufweist;
- Formen einer Baugruppe (130) durch
a) Bereitstellen einer Ummantelung (108) an der Außenfläche (103);
b) Wickeln mindestens einer Schnur (117) um die Ummantelung (108);
c) Abscheiden einer Schicht (121) auf der gewickelten Schnur, wobei die Schicht eine ungehärtete polymere oder elastomere Verbindung umfasst;
- Vulkanisieren der Baugruppe (130), um die Verbindung auszuhärten und eine Hülse (101) aus der Ummantelung, der Schnur und der Schicht zu formen; wobei der Vulkanisationsschritt das Aufbringen von Druck und Wärme in einer solchen Weise umfasst, dass die ungehärtete Verbindung schmilzt, um die gewickelte Schnur fließt und die Ummantelung radial gegen die Außenfläche (103) drückt;
- Bearbeiten der ausgehärteten Verbindung der Hülse (101), um eine Vielzahl von ringförmigen Nuten (20) zu formen, die axial mit ringförmigen Rippen (19) abwechseln, während die Hülse (101) auf einem Träger (100; 140) montiert ist;
- Schneiden der bearbeiteten Hülse, um eine Vielzahl von Scheiben zu erhalten, die jeweils einen jeweiligen Riemen (1) definieren;
wobei die Außenfläche (103) mindestens eine Aussparung aufweist und wobei die Ummantelung (108) während des Vulkanisationsschritts durch die geschmolzene Verbindung gedrückt wird, um die Aussparung auszufüllen und einen entsprechenden Zahn (14) der Hülse (101) zu formen; wobei der Zahn (14) während des Bearbeitungsschritts in einen entsprechenden Haltesitz (104; 144) des Trägers (100; 140) eingreift, um die Hülse (101) in Bezug auf den Träger (100; 140) zu halten.

2. Verfahren nach Anspruch 1, wobei der Träger (100; 140) eine Achse aufweist und während des Bearbeitungsschritts um seine Achse gedreht wird; wobei der Eingriff zwischen dem Haltesitz (104; 144) und dem Zahn (14) konfiguriert ist, um die Hülse (101) in einer winkelmäßig fixierten Position um die Trägerachse zu halten.

3. Verfahren nach Anspruch 1 oder 2, wobei der Träger durch den Formzylinder (100) definiert ist und der Haltesitz durch die Aussparung (104) definiert ist.

4. Verfahren nach Anspruch 1 oder 2, wobei der Träger durch einen weiteren Zylinder (140) definiert ist, der sich von dem Formzylinder (100) unterscheidet; wobei das Verfahren nach dem Vulkanisationsschritt die Schritte zum axialen Entfernen der Hülse (101) von dem Formzylinder (101) und zum Anbringen der entfernten Hülse (101) an dem weiteren Zylinder (140) umfasst.

5. Verfahren nach Anspruch 4, wobei der weitere Zylinder (140) einen Außendurchmesser aufweist, der geringer als der des Formzylinders (140) ist.

6. Verfahren nach einem der vorhergehenden Ansprüche, wobei der Haltesitz (144) und die Aussparung (104) die gleiche Form aufweisen.

7. Verfahren nach Anspruch 6, wobei die Aussparung (104) und der Haltesitz (144) jeweilige Nuten definieren, die parallel zur Achse (102) des Formzylinders (100) bzw. zu einer Achse des Trägers verlaufen und die einen konstanten Querschnitt entlang der axialen Länge aufweisen.

8. Verfahren nach einem der vorhergehenden Ansprüche, wobei der Bearbeitungsschritt durchgeführt wird, um alle ringförmigen Nuten (20) für die gesamte axiale Länge der Hülse (101) gleichzeitig zu formen.

9. Verfahren nach Anspruch 8, wobei alle ringförmigen Nuten (20) durch ein einziges Bearbeitungswerkzeug geformt werden.

10. Verfahren nach einem der vorhergehenden Ansprüche, wobei die Außenfläche (103) eine Vielzahl von Nuten (104) aufweist, die sich mit Vorsprüngen (106) entlang des ringförmigen Umfangs des Formzylinders (100) abwechseln; wobei die Nuten (104) während des Vulkanisationsschritts jeweilige Zähne (14) der Hülse (101) formen und so ausgeformt sind, dass sie das Profil eines Zahnriemens definieren.

11. Verfahren nach einem der vorhergehenden Ansprüche, wobei die Schnur (117) direkt auf die Ummantelung (108) gewickelt wird, ohne dass dazwischen eine zusätzliche Schicht vorliegt.

12. Verfahren nach einem der vorhergehenden Ansprüche, wobei die Hülse (101) von dem Formzylinder (101) entfernt wird, indem ein unter Druck stehender Gasstrahl radial zwischen der Hülse und dem Formzylinder aufgeblasen wird.

13. Maschine zur Bearbeitung einer Hülse (101) bei einem Verfahren zur Herstellung von Keilrippenriemen nach einem der vorhergehenden Ansprüche, wobei die Maschine umfasst:
- einen Träger (100; 140), der geeignet ist, die Hülse (101) zu tragen, und
- mindestens ein Bearbeitungswerkzeug, das geeignet ist, Material von der Hülse zu entfernen, um eine Vielzahl von ringförmigen Nuten (20) zu formen, die sich axial mit ringförmigen Rippen (19) abwechseln, während die Hülse (101) während des Gebrauchs auf dem Träger (100; 140) montiert ist;
**dadurch gekennzeichnet, dass** der Träger (100; 140) eine Seitenfläche mit mindestens einem radialen Haltesitz (104; 144) umfasst, in den während der Bearbeitung ein entsprechender Zahn (14) der Hülse (101) eingreift, um die Hülse (101) in Bezug auf den Träger (100; 140) zu halten.

14. Maschine nach Anspruch 13, wobei der Haltesitz eine Nut ist, die parallel zu einer Achse des Trägers verläuft und einen Querschnitt aufweist, der entlang seiner axialen Länge konstant ist.

15. Maschine nach Anspruch 14, wobei die Seitenfläche des Trägers (100; 140) eine Vielzahl von Nuten (104; 144) aufweist, die sich mit Vorsprüngen entlang des ringförmigen Umfangs des Trägers abwechseln und so ausgeformt sind, dass sie ein Profil definieren, das dem eines Zahnriemens entspricht.

## Revendications

1. Procédé de fabrication pour la fabrication de courroies à multiples nervures, comprenant les étapes suivantes :
- la fourniture d'un cylindre de formage (100) qui s'étend le long d'un axe (102) et présente une surface extérieure (103) ;
- la formation d'un assemblage (130) par
a) la fourniture d'une enveloppe (108) sur ladite surface extérieure (103) ;
b) l'enroulement d'au moins un cordon (117) autour de ladite enveloppe (108) ;
c) le dépôt d'une couche (121) sur le cordon enroulé, ladite couche comprenant un composé polymère ou élastomère non durci ;
- la vulcanisation dudit assemblage (130) de manière à durcir ledit composé et former un manchon (101) à partir de ladite enveloppe, dudit cordon et de ladite couche ; l'étape de vulcanisation comprenant l'application d'une pression et d'une chaleur de manière à ce que le composé non durci fonde, s'écoule autour du cordon enroulé et presse radialement l'enveloppe contre ladite surface extérieure (103) ;
- l'usinage du composé durci dudit manchon (101) de manière à former une pluralité de rainures annulaires (20), alternées axialement avec des nervures annulaires (19), alors que ledit manchon (101) est monté sur un support (100 ; 140) ;
- la coupe du manchon usiné de manière à obtenir une pluralité de tranches, chacune définissant une courroie respective (1) ;
dans lequel ladite surface extérieure (103) présente au moins un renfoncement, et dans lequel l'enveloppe (108) est pressée par le composé fondu pendant l'étape de vulcanisation pour remplir ledit renfoncement et former une dent (14) correspondante du manchon (101) ; pendant l'étape d'usinage, ladite dent (14) s'engage dans un siège de retenue correspondant (104 ; 144) dudit support (100 ; 140), de manière à retenir le manchon (101) par rapport au support (100 ; 140).

2. Procédé selon la revendication 1, dans lequel ledit support (100 ; 140) a un axe et est amené à tourner autour de son axe pendant l'étape d'usinage ; l'engagement entre le siège de retenue (104 ; 144) et la dent (14) étant configuré pour maintenir le manchon (101) dans une position angulairement fixe, autour de l'axe du support.

3. Procédé selon la revendication 1 ou 2, dans lequel ledit support est défini par ledit cylindre de formage (100), et ledit siège de retenue est défini par ledit renfoncement (104).

4. Procédé selon la revendication 1 ou 2, dans lequel ledit support est défini par un autre cylindre (140), distinct dudit cylindre de formage (100) ; après l'étape de vulcanisation, le procédé comprenant les étapes consistant à retirer axialement le manchon (101) du cylindre de formage (101) et à installer le manchon retiré (101) sur ledit autre cylindre (140).

5. Procédé selon la revendication 4, dans lequel ledit autre cylindre (140) a un diamètre extérieur inférieur à celui du cylindre de formage (140) .

6. Procédé selon l'une quelconque des revendications précédentes, dans lequel ledit siège de retenue (144) et ledit renfoncement (104) ont la même forme.

7. Procédé selon la revendication 6, dans lequel ledit renfoncement (104) et ledit siège de retenue (144) définissent des rainures respectives qui sont parallèles respectivement à l'axe (102) du cylindre de formage (100) et à un axe du support, et qui ont une section transversale constante, suivant la longueur axiale.

8. Procédé selon l'une quelconque des revendications précédentes, dans lequel l'étape d'usinage est réalisée de manière à former toutes les rainures annulaires (20), sur toute la longueur axiale du manchon (101), en même temps.

9. Procédé selon la revendication 8, dans lequel toutes les rainures annulaires (20) sont formées par un seul outil d'usinage.

10. Procédé selon l'une quelconque des revendications précédentes, dans lequel ladite surface extérieure (103) présente une pluralité de rainures (104), alternées avec des saillies (106) le long de la périphérie annulaire du cylindre de formage (100) ; lesdites rainures (104) formant, pendant l'étape de vulcanisation, des dents respectives (14) du manchon (101) et étant façonnées pour définir le profil d'une courroie de distribution.

11. Procédé selon l'une quelconque des revendications précédentes, dans lequel ledit cordon (117) est enroulé directement sur l'enveloppe (108), sans aucune couche supplémentaire entre les deux.

12. Procédé selon l'une quelconque des revendications précédentes, dans lequel ledit manchon (101) est retiré du cylindre de formage (101) en insufflant un jet de gaz sous pression radialement entre le manchon et le cylindre de formage.

13. Machine pour l'usinage d'un manchon (101) lors d'un procédé de fabrication de courroies à multiples nervures selon l'une quelconque des revendications précédentes, la machine comprenant :
- un support (100 ; 140) apte à supporter ledit manchon (101), et
- au moins un outil d'usinage apte à enlever de la matière dudit manchon de manière à former une pluralité de rainures annulaires (20), alternées axialement avec des nervures annulaires (19), alors que ledit manchon (101) est monté sur ledit support (100 ; 140) en cours d'utilisation ;
**caractérisée en ce que** ledit support (100 ; 140) comprend une surface latérale ayant au moins un siège de retenue radial (104 ; 144) engagé, pendant l'usinage, par une dent correspondante (14) dudit manchon (101), de manière à retenir le manchon (101) par rapport au support (100 ; 140).

14. Machine selon la revendication 13, dans laquelle ledit siège de retenue est une rainure, qui est parallèle à un axe du support, et présente une section transversale qui est constante suivant sa longueur axiale.

15. Machine selon la revendication 14, dans laquelle la surface latérale dudit support (100 ; 140) présente une pluralité de rainures (104 ; 144), alternées avec des saillies le long de la périphérie annulaire du support, et façonnées de manière à définir un profil correspondant à celui d'une courroie de distribution.
